(19) Europäisches Patentamt / European Patent Office / Office européen des brevets

(11) **EP 4 485 752 B1**

(12) **EUROPEAN PATENT SPECIFICATION**

(45) Date of publication and mention
of the grant of the patent:
**20.05.2026 Bulletin 2026/21**

(21) Application number: **23194146.9**

(22) Date of filing: **30.08.2023**

(51) International Patent Classification (IPC):
*H02K 1/14* (2006.01)   *H02K 1/276* (2022.01)
*H02K 21/16* (2006.01)

(52) Cooperative Patent Classification (CPC):
**H02K 1/276; H02K 1/146; H02K 1/2766;
H02K 21/16;** H02K 2213/03

(54) **PERMANENT MAGNET MOTOR FOR COMPRESSOR**

PERMANENTMAGNETMOTOR FÜR VERDICHTER

MOTEUR À AIMANTS PERMANENTS POUR COMPRESSEUR

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **30.06.2023 TW 112206731 U**

(43) Date of publication of application:
**01.01.2025 Bulletin 2025/01**

(73) Proprietor: **Rechi Precision Co., Ltd
328 Taoyuan City (TW)**

(72) Inventor: **YEH, LUNG-YI
328 Taoyuan City (TW)**

(74) Representative: **Lang, Christian
LangPatent Anwaltskanzlei IP Law Firm
Ingolstädter Straße 5
80807 München (DE)**

(56) References cited:
CN-U- 205 647 059     CN-U- 208 707 399
US-A1- 2013 187 506     US-A1- 2017 101 996

**Description**

**BACKGROUND**

Technical Field

The present disclosure relates to a compressor, and in particular, to a permanent magnet motor for a compressor.

Description of Related Art

The existing rotary compressor mainly includes the following components: exhaust pipe, housing, permanent magnet motor (stator, rotor), drive shaft, upper bearing, muffler, compression unit (cylinder body, piston), lower bearing, bottom cover, outlet pipe, accumulator and inlet pipe. The basic working principle of the compressor is as follows: when the compressor is powered on, the stator generates a magnetic field to rotate the rotor and drive the drive shaft; and the drive shaft drives the piston to move eccentrically in the cylinder body and compress the low-temperature and low-pressure refrigerant gas into high-temperature and high-pressure gas. The gas is then discharged from the cylinder body through a muffler into the housing. After passing through the edges on the outer side of stator and the gaps between rotors, the gas is discharged into a refrigeration cycle system through the outlet pipe.

However, due to the increasing requirements for air conditioning and compressor efficiency, it has become necessary to add more components to the permanent magnet motor. For example, increasing the accumulated thickness of the motor, increasing the amount of the copper wires and increasing the remanent magnetization (Br) of the magnets are used to enhance the performance of the permanent magnet motor. However, for low-capacity compressor applications, adding more magnetic components to the permanent magnet motor does not significantly improve the performance. Moreover, in recent years, material costs have increased dramatically, with copper, iron, and rare earth materials even rising at multiples. This results in low cost-performance ratio (CP value) of the application of this type of compressor. Therefore, improving efficiency and reducing material costs have become urgent issues.

Document US 2017/0101996 A1 relates to an air flow regulating device and shows a permanent magnet motor having low rated output power according to the preamble of claim 1. From documents CN 208 707 399 U, CN 205 647 059 U and US 2013/0187506 A1 other conventional designs of a permanent magnet motor are known.

**SUMMARY**

According to the invention, a permanent magnet motor for compressor according to claim 1 is provided.

In one example, a remanent magnetization of the magnet is Br, and the following equation is satisfied: $Br \leq 1.29T$ at 20°C.

In one example, a number of the magnetic zones of the rotor core is 6 and a number of the stator slot of the stator core is 9.

In one example, a number of the magnetic zones of the rotor core is 8; and a number of the stator slot of the stator core is 12.

In one example, the permanent magnet motor further includes a magnet slot disposed in each of the magnetic zones. The magnet slot penetrates from a top surface of the magnetic zone to a bottom surface of the magnetic zone, and the magnet is disposed in the magnet slot.

The magnet slot of each of the magnet zones can be I-strip shaped with the one magnet arranged in the slot or V-shaped with the set of magnets arranged in the slot.

**BRIEF DESCRIPTION OF THE DRAWINGS**

The present disclosure can be more fully understood by reading the following detailed description of the embodiment, with reference made to the accompanying drawings as follows:

Fig. 1 is a top view of a first type of a permanent magnet motor according to one embodiment of the present disclosure;
Fig. 2 is a side view of the permanent magnet motor of Fig. 1;
Fig. 3 is a top view of a second type of a permanent magnet motor according to one embodiment of the present disclosure;
Fig. 4 is a top view of a third type of a permanent magnet motor according to one embodiment of the present disclosure; and
Fig. 5 is a top view of a fourth type of a permanent magnet motor according to one embodiment of the present disclosure.

**DETAILED DESCRIPTION**

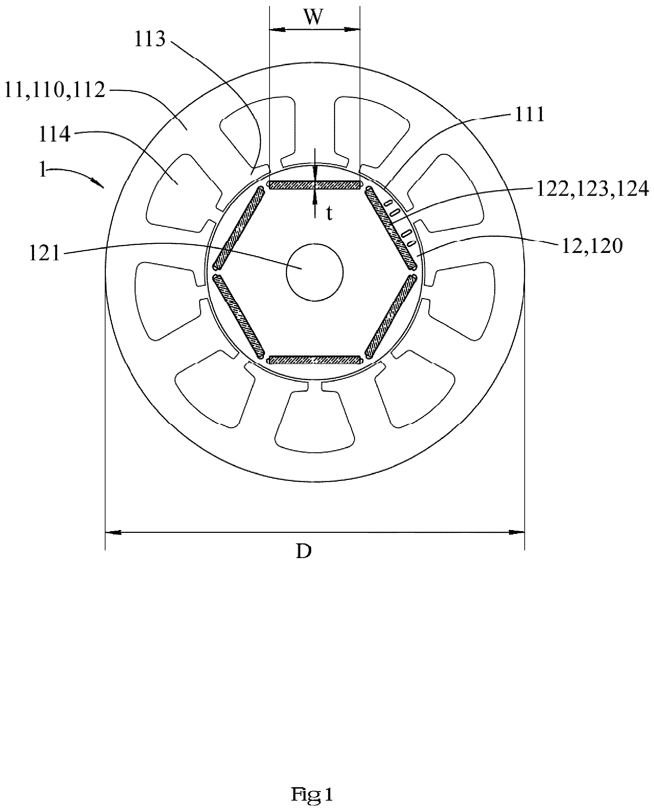

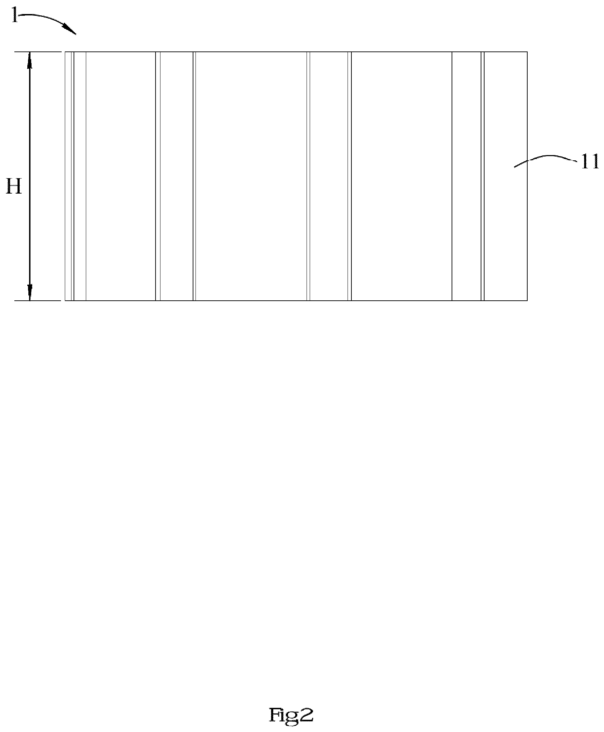

Refer to Figs. 1 to 5, a permanent magnet motor 1 for a compressor of the present disclosure includes a stator 11 and a rotor 12.

The stator 11 includes a stator core 110. The stator core 110 is a cylinder with a predetermined length, and the stator core 110 is selected from a plurality of silicon steel sheets and is formed by stamping dies. The stator core 110 includes a center hole 111, a yoke portion 112 and a plurality of stator teeth 113. The center hole 111 is formed in the middle of the stator core 110 and is a through hole. The stator teeth 113 are attached to the yoke portion 112 and are spaced apart along a circumference of the yoke portion 112. The stator teeth 113 are located on the inner side of the yoke portion 112, and a stator slot 114 is defined between each adjacent pair of stator teeth 113. The outer contour of the stator core 110 is in the shape of a circular ring.

The rotor 12 includes a rotor core 120. The rotor core 120 is a cylinder with a predetermined length. The rotor core 120 is disposed in the center hole 111 of the stator core 110 and rotates relative to the stator core 110. The rotor core 120 includes a shaft hole 121 at a center thereof. The shaft hole 121 is used for disposing a motor shaft (not shown in the figures). The shaft hole 121 penetrates through two ends (upper end and lower end) of the rotor core 120 and is evenly divided into multiple magnetic zones 122 centered around the shaft hole 121, and a magnet 124 is disposed in each of the magnetic zones 122.

The cylinder of the rotor core 120 of the present disclosure is formed by sequentially stacking a plurality of silicon steel sheets from bottom to top. The center of each of the silicon steel sheet has an inner hole, which is stacked to form the aforementioned shaft hole 121 that matched the rotor core 120 and the motor shaft (not shown in the figures).

More detailed explanations are further described in the following paragraphs.

An output rated power of the permanent magnet motor 1 is less than or equal to 450W, an outer diameter of the stator core 110 is D, an accumulated thickness of the stator core 110 is H, and the following equation is satisfied: $2.25 \leq D/H \leq 3.65$. Furthermore, a remanent magnetization of the magnet 124 is Br, and the following equation is satisfied: $Br \leq 1.29T$ at 20°C. Under these conditions, a maximum circular area of the stator core 110 is A, a thickness of the magnet 124 is t, a width of the magnet 124 is W, the remanent magnetization of the magnet 124 at 20°C is Br, and the following equation is satisfied:

$$0.36 \ [T^{-1}] \leq A \ / \ (Br \times W \times t) \leq 0.44 \ [T^{-1}], \P$$

where A is in $mm^2$, Br is in T (Tesla) and W and t are both in mm.

In one embodiment, the magnets 124 are respectively disposed at the magnetic zones 122 of the rotor core 120. A magnet slot 123 is disposed in each of the magnetic zones 122. The magnet slot 123 penetrates from a top surface of the magnetic zone 122 to a bottom surface of the magnetic zone 122, and the magnet 124 is disposed in the magnet slot 123. The magnet slot 123 of each of the magnet zones 122 can be I-strip shaped or V-shaped. The magnet slot 123 of each of the magnetic zones 122 has at least two magnets 124 if the magnet slot 123 is V-shaped.

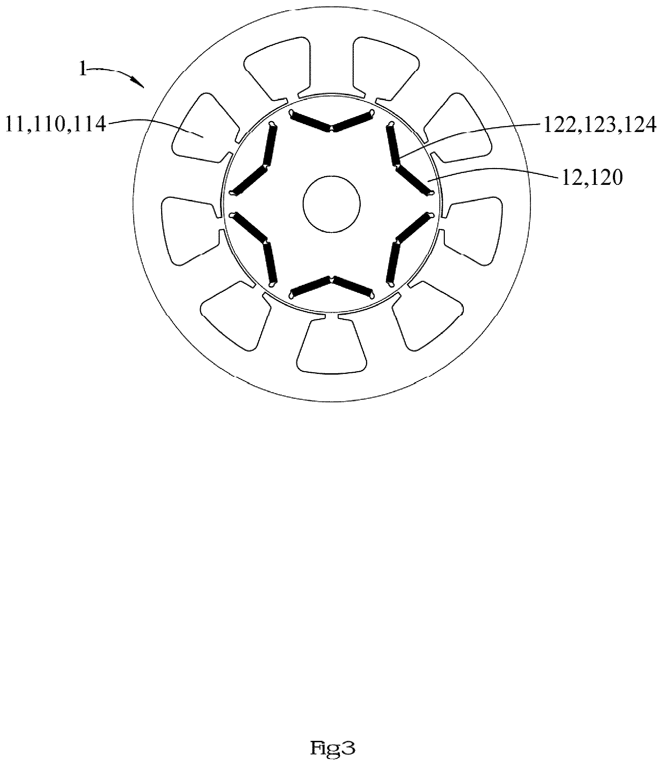

In one embodiment, the number of the magnetic zones 122 of the rotor core 120 is 6, and the magnetic slot 123 of the magnetic zone 122 of the rotor core 120 is I-strip shaped or V-shaped. The magnet slots 123 are for disposing the magnets 124. The rotor core 120 and 6 (or at least 12) magnets 124 buried in the magnet slots 123 of the magnetic zones 122 of the rotor core 120 are used to form the rotor 12 having 6 poles, and the number of the stator slots 114 of the stator core 110 of the stator 11 is 9. Therefore, the permanent magnet motor 1 is a 6-pole, 9-slot permanent magnet motor 1 (as shown in Figs. 1 and 3).

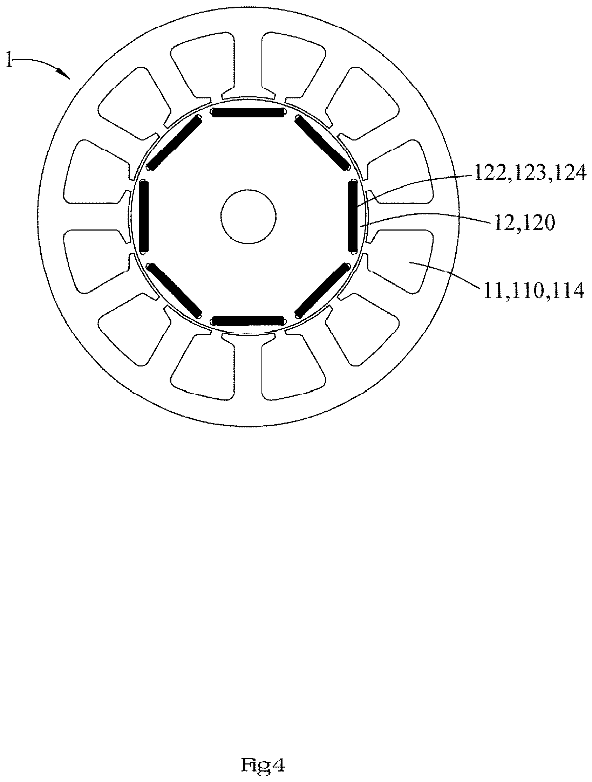

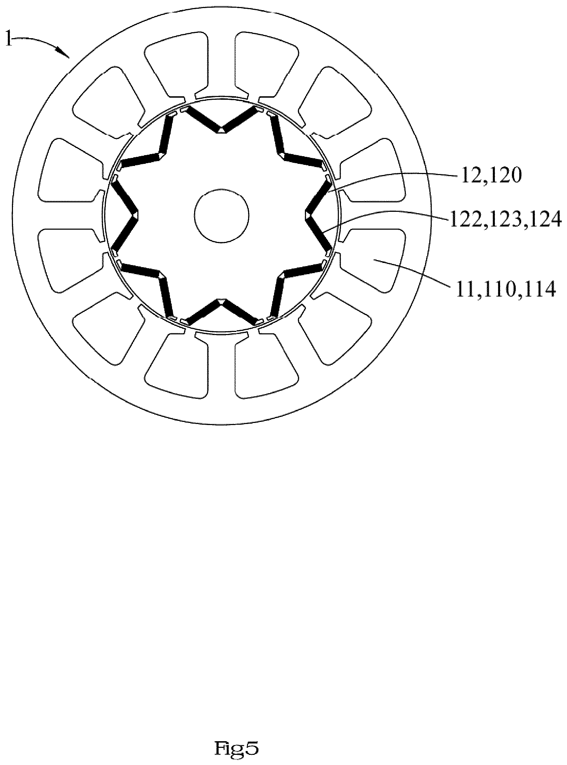

In one embodiment, the number of the magnetic zones 122 of the rotor core 120 is 8, and the magnetic slot 123 of the magnetic zone 122 of the rotor core 120 is I-strip shaped or V-shaped. The magnet slots 123 are for disposing the magnets 124. The rotor core 120 and 8 (or at least 16) magnets 124 buried in the magnet slots 123 of the magnetic zones 122 of the rotor core 120 are used to form the rotor 12 having 8 poles, and the number of the stator slots 114 of the stator core 110 of the stator 11 is 12. Therefore, the permanent magnet motor 1 is an 8-pole, 12-slot permanent magnet motor 1 (as shown in Figs. 4 and 5).

Furthermore, the output rated power of the permanent magnet motor 1 of the present disclosure is less than or equal to 450W, where the outer diameter of the stator core 110 is D, the accumulated thickness of the stator core 110 is H, and the following equation is satisfied: $2.25 \leq D/H \leq 3.65$. Under the condition that the magnet 124 has a remanent magnetization $Br \leq 1.29T$ at 20°C, the maximum circular area A of the stator core 110 (the circular area A of the maximum diameter D of the stator core 110), the remanent magnetization Br of the magnet 124, and the dimension of the magnet 124 are within a certain proportional range, so that higher efficiency of the permanent magnet motor 1 can be obtained using less material, and the limitations on the application of the number of the poles of the rotor 12 and the number of the slots of the stator 11 can be eliminated. Therefore, in the present disclosure, the number of the magnetic zones 122 of the rotor core 120 may be 8 or more, and the number of the stator slots 114 of the stator core 110 may be 12 or more.

As summarized above, the permanent magnet motor 1 of the present disclosure includes a stator 11 and a rotor 12. The stator 11 includes a stator core 110, and the rotor 12 includes a rotor core 120. The output rated power of the permanent magnet motor 1 is less than or equal to 450W. The outer diameter of the stator core 110 is D, the accumulated thickness of the stator core 110 is H, and the following equation is satisfied: $2.25 \leq D/H \leq 3.65$. In this condition, high efficiency and low cost is achieved, and the high CP value (Cost-Performance ratio) design of the permanent magnet motor 1 reduces the accumulated thickness H of the permanent magnet motor 1, which in turn reduces the overall height of the compressor.

In addition, the permanent magnet motor 1 is used in a compressor, the output rated power of the permanent magnet motor 1 is less than or equal to 450 W. The outer diameter of the stator core 110 is D, the accumulated thickness of the stator core 110 is H, and the following equation is satisfied: $2.25 \leq D/H \leq 3.65$. And when the remanent magnetization Br of the magnet 124 at 20°C is $\leq 1.29$T, the maximum circular area of the stator core 110 is A, the thickness of the magnet is t, the width of the magnet 124 is W, and the following equation is satisfied: $0.36 \, [\text{T}^{-1}] \leq A/(Br \times W \times t) \leq 0.44 \, [\text{T}^{-1}]$, where A is in mm$^2$, Br is in T (Tesla) and W and t are both in mm. Thus, the remanent magnetization Br and the dimensions of the magnet 124 and the stator core 110 are all within a certain proportional range, allowing for higher efficiency of the permanent magnet motor 1 by using less permanent magnetic material, and the limitations on the number of the poles of the rotor 12 and the number of the slots of the stator 11 can be eliminated. In this way, by using the magnet 124 with remanent magnetization $Br \leq 1.29$T, it is possible to reduce the use of rare earth magnetic materials and even achieve applications without rare earth magnetic materials.

In summary, the present disclosure provides a permanent magnet motor 1 appliable to a compressor. By using a high CP value permanent magnet motor 1 with an output rated power of less than or equal to 450W, the costs of iron cores, magnets, copper wires and raw materials can be reduced. In addition, the structural improvement of the permanent magnet motor 1 reduces the overall height of the compressor and increases the efficiency of the permanent magnet motor 1.

## Claims

1. A permanent magnet motor (1) for a compressor, **characterized in that** comprising:

   a stator (11) comprising a stator core (110), wherein the stator core (110) comprises a center hole (111), a yoke portion (112) and a plurality of stator teeth (113), the center hole (111) is formed in the middle of the stator core (110) and is a through hole, the stator teeth (113) are attached to the yoke portion (112) and are spaced apart along a circumference of the yoke portion (112), the stator teeth (113) are located on the inner side of the yoke portion (112) and a stator slot (114) is defined between each adjacent pair of stator teeth (113); and

   a rotor (12) comprising a rotor core (120), wherein the rotor core (120) is disposed in the center hole (111) of the stator core (110) and rotates relative to the stator core (110), the rotor core (120) comprises a shaft hole (121) at a center thereof, the shaft hole (121) penetrates through two ends of the rotor core (120) and is evenly divided into multiple magnetic zones (122) centered around the shaft hole (121) and one magnet (124) or a set of at least two magnets (124) that are arranged in a V-shaped magnet slot (123) is disposed in each of the magnetic zones (122);

   wherein an output rated power of the permanent magnet motor (1) is less than or equal to 450W, an outer diameter of the stator core (110) is D, an accumulated thickness of the stator core (110) is H, and the following equation is satisfied: $2.25 \leq D/H \leq 3.65$;

   **characterized in that**

   a maximum circular area of the stator core (110) is $A = \pi/4 \times D^2$, a thickness of the magnet (124) is t, a width of the magnet (124) or the set of magnets (124) is W, a remanent magnetization of the magnet (124) at 20°C is Br, and the following equation is satisfied:

$$0.36 \, [\text{T}^{-1}] \leq A/(Br \times W \times t) \leq 0.44 \, [\text{T}^{-1}], \P$$

   where A is in mm$^2$, Br is in T (Tesla) and W and t are both in mm.

2. The permanent magnet motor (1) of claim 1, **characterized in that** the following equation is satisfied: $Br \leq 1.29$T.

3. The permanent magnet motor (1) of claim 1, **characterized in that** a number of the magnetic zones (122) of the rotor core (120) is 6; and a number of the stator slot (114) of the stator core (110) is 9.

4. The permanent magnet motor (1) of claim 1, **characterized in that** a number of the magnetic zones (122) of the rotor core (120) is 8; and a number of the stator slot (114) of the stator core (110) is 12.

5. The permanent magnet motor (1) of claim 1, **characterized in that** a number of the magnetic zones (122) of the rotor core (120) is greater than 8; and a number of the stator slot (114) of the stator core (110) is greater than 12.

6. The permanent magnet motor (1) of claim 1, **characterized in** further comprising a magnet slot (123) disposed in each of the magnetic zones (122), wherein the magnet slot (123) penetrates from a top surface of the magnetic zone (122) to a bottom surface of the magnetic zone (122), and the one magnet (124) or the set of magnets (124) is disposed in the magnet slot (123).

7. The permanent magnet motor (1) of claim 6, **characterized in that** the magnet slot (123) of each of the magnet zones (122) is I-strip shaped with the one magnet (124) arranged in the slot (123) or V-shaped with the set of magnets (124) arranged in the slot (123).

**Patentansprüche**

1. Permanentmagnetmotor (1) für einen Kompressor, **dadurch gekennzeichnet, dass** dieser umfasst:

   einen Stator (11), der einen Statorkern (110) umfasst, wobei der Statorkern (110) ein zentrales Loch (111), einen Jochabschnitt (112) und eine Vielzahl von Statorzähnen (113) umfasst, wobei das zentrale Loch (111) in der Mitte des Statorkerns (110) ausgebildet ist und eine Durchgangsbohrung ist, wobei die Statorzähne (113) an dem Jochabschnitt (112) angebracht sind und entlang eines Umfangs des Jochabschnitts (112) voneinander beabstandet sind, wobei sich die Statorzähne (113) an der Innenseite des Jochabschnitts (112) befinden und ein Statorschlitz (114) zwischen jedem benachbarten Paar von Statorzähnen (113) definiert ist; und
   einen Rotor (12), der einen Rotorkern (120) umfasst, wobei der Rotorkern (120) in dem zentralen Loch (111) des Statorkerns (110) angeordnet ist und sich relativ zum Statorkern (110) dreht, wobei der Rotorkern (120) in seiner Mitte ein Schaftloch (121) aufweist, wobei das Schaftloch (121) durch zwei Enden des Rotorkerns (120) hindurchgeht und gleichmäßig in mehrere magnetische Zonen (122) unterteilt ist, die um das Schaftloch (121) herum zentriert sind, und ein Magnet (124) oder ein Set aus mindestens zwei Magneten (124), welche in einem V-förmigen Magnetschlitz angeordnet sind, ist in jeder der magnetischen Zonen (122) angeordnet;
   wobei eine Ausgangsnennleistung des Permanentmagnetmotors (1) Geringer als oder gleich 450W ist, ein Außendurchmesser des Statorkerns (110) D ist, eine akkumulierte Dicke des Statorkerns (110) H ist, und die folgende Gleichung erfüllt ist: $2{,}25 \leq D/H \leq 3{,}65$;
   **dadurch gekennzeichnet, dass**
   eine maximale Kreisfläche des Statorkerns (110) $A = \pi/4 \times D^2$ ist, eine Dicke des Magneten (124) t ist, eine Breite des Magneten (124) oder des Sets von Magneten (124) W ist, eine remanente Magnetisierung des Magneten (124) bei 20°C Br ist, und die folgende Gleichung erfüllt ist:

$$0{,}36 \ [T^{-1}] \leq A/(Br \times W \times t) \leq 0{,}44 \ [T^{-1}],$$

   wobei A in $mm^2$ ist, Br in T (Tesla) ist und W und t beide in mm sind.

2. Permanentmagnetmotor (1) nach Anspruch 1, **dadurch gekennzeichnet, dass** die folgende Gleichung erfüllt ist: $Br \leq 1{,}29T$.

3. Permanentmagnetmotor (1) nach Anspruch 1, **dadurch gekennzeichnet, dass** eine Anzahl der magnetischen Zonen (122) des Rotorkerns (120) 6 ist; und eine Anzahl der Statorschlitze (114) des Statorkerns (110) 9 ist.

4. Permanentmagnetmotor (1) nach Anspruch 1, **dadurch gekennzeichnet, dass** eine Anzahl der magnetischen Zonen (122) des Rotorkerns (120) 8 ist; und eine Anzahl der Statorschlitze (114) des Statorkerns (110) 12 ist.

5. Permanentmagnetmotor (1) nach Anspruch 1, **dadurch gekennzeichnet, dass** eine Anzahl der magnetischen Zonen (122) des Rotorkerns (120) größer als 8 ist; und eine Anzahl der Statorschlitze (114) des Statorkerns (110) größer als 12 ist.

**6.** Permanentmagnetmotor (1) nach Anspruch 1, **dadurch gekennzeichnet, dass** dieser ferner einen Magnetschlitz (123) umfasst, der in jeder der magnetischen Zonen (122) angeordnet ist, wobei der Magnetschlitz (123) von einer oberen Fläche der magnetischen Zone (122) zu einer unteren Fläche der magnetischen Zone (122) vordringt, und der eine Magnet (124) oder das Set von Magneten (124) ist in dem Magnetschlitz (123) angeordnet.

**7.** Permanentmagnetmotor (1) nach Anspruch 6, **dadurch gekennzeichnet, dass** der Magnetschlitz (123) von jeder der magnetischen Zonen (122) I-streifenförmig ist, wobei der eine Magnet (124) in dem Schlitz (123) angeordnet ist, oder V-förmig ist, wobei das Set von Magneten (124) in dem Schlitz (123) angeordnet ist.

## Revendications

**1.** Moteur à aimant permanent (1) pour un compresseur, **caractérisé en ce qu'**il comprend :

un stator (11) comprenant un noyau de stator (110), dans lequel le noyau de stator (110) comprend un trou central (111), une portion de culasse (112) et une pluralité de dents de stator (113), le trou central (111) est formé au milieu du noyau de stator (110) et est un trou traversant, les dents de stator (113) sont attachées à la portion de culasse (112) et sont espacées le long d'une circonférence de la portion de culasse (112), les dents de stator (113) sont situées sur le côté intérieur de la portion de culasse (112) et une fente de stator (114) est définie entre chaque paire adjacente de dents de stator (113) ; et
un rotor (12) comprenant un noyau de rotor (120), dans lequel le noyau de rotor (120) est disposé dans le trou central (111) du noyau de stator (110) et tourne par rapport au noyau de stator (110), le noyau de rotor (120) comprend un trou d'arbre (121) au niveau d'un centre de celui-ci, le trou d'arbre (121) pénètre à travers deux extrémités du noyau de rotor (120) et est divisé uniformément en de multiples zones magnétiques (122) centrées autour du trou d'arbre (121) et un aimant (124) ou un ensemble d'au moins deux aimants (124) qui sont agencés dans une fente magnétique en forme de V (123) est disposé dans chacune des zones magnétiques (122) ;
dans lequel une puissance nominale de sortie du moteur à aimant permanent (1) est inférieure ou égale à 450 W, un diamètre extérieur du noyau de stator (110) est D, une épaisseur cumulée du noyau de stator (110) est H et l'équation suivante est satisfaite : $2{,}25 \leq D/H \leq 3{,}65$ ;
**caractérisé en ce que**
une surface circulaire maximale du noyau de stator (110) est $A = \pi/4 \times D^2$, une épaisseur de l'aimant (124) est t, une largeur de l'aimant (124) ou de l'ensemble d'aimants (124) est W, une aimantation rémanente de l'aimant (124) à 20 °C est Br, et l'équation suivante est satisfaite :

$$0{,}36 \; [T^{-1}] \leq A / (Br \times W \times t) \leq 0{,}44 \; [T^{-1}],$$

où A est en $mm^2$, Br est en T (Tesla) et W et t sont tous deux en mm.

**2.** Moteur à aimant permanent (1) selon la revendication 1, **caractérisé en ce que** l'équation suivante est satisfaite : $Br \leq 1{,}29$ T.

**3.** Moteur à aimant permanent (1) selon la revendication 1, **caractérisé en ce qu'**un nombre des zones magnétiques (122) du noyau de rotor (120) est 6 ; et un nombre de fentes de stator (114) du noyau de stator (110) est 9.

**4.** Moteur à aimant permanent (1) selon la revendication 1, **caractérisé en ce qu'**un nombre des zones magnétiques (122) du noyau de rotor (120) est 8 ; et un nombre de fentes de stator (114) du noyau de stator (110) est 12.

**5.** Moteur à aimant permanent (1) selon la revendication 1, **caractérisé en ce qu'**un nombre des zones magnétiques (122) du noyau de rotor (120) est supérieur à 8 ; et
un nombre des fentes de stator (114) du noyau de stator (110) est supérieur à 12.

**6.** Moteur à aimant permanent (1) selon la revendication 1, **caractérisé en ce qu'**il comprend en outre une fente magnétique (123) disposée dans chacune des zones magnétiques (122), dans lequel la fente magnétique (123) pénètre à partir d'une surface supérieure de la zone magnétique (122) vers une surface inférieure de la zone magnétique (122), et l'un aimant (124) ou l'ensemble d'aimants (124) est disposé dans la fente magnétique (123).

**7.** Moteur à aimant permanent (1) selon la revendication 6, **caractérisé en ce que** la fente magnétique (123) de chacune des zones magnétiques (122) est en forme de bande en I avec l'un aimant (124) agencé dans la fente (123) ou en forme de V avec l'ensemble d'aimants (124) agencés dans la fente (123).

Fig 1

Fig2

11,110,114

122,123,124

12,120

Fig3

**1**

**122,123,124**

**12,120**

**11,110,114**

Fig4

12,120

122,123,124

11,110,114

Fig5

**EP 4 485 752 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20170101996 A1
- CN 208707399 U
- CN 205647059 U
- US 20130187506 A1